# EUROPEAN PATENT APPLICATION

(11) **EP 1 111 886 A1**
(43) Date of publication of application: **27.06.2001**
(21) Application number: 99125768.4
(22) Date of filing: 23.12.1999
(51) Int. Cl.: H04M 1/725, H04Q 7/38

(54) **Telephone apparatus**

(71) Applicant: Sony International (Europe) GmbH, 50829 Köln (DE)
(72) Inventor: Kreuz, Georg M., Sony International (Europe) GmbH, 85609 Ascheim-Dornach (DE); Weber, Matthias, 81927 München (DE)
(74) Representative: Körber, Martin, Dipl.-Phys.

(57) **Abstract**

The present invention relates to a telephone apparatus (1, 10, 20) allocated to a fixed place, with communication means (5, 22) for transmitting and receiving communication data in a communication system, receiving means (6, 30) for receiving control signals in a wireless control system transmitted from a mobile terminal, said mobile terminal being adapted to communicate data in a wireless telecommunication system different from said wireless control system, detecting means (7, 29) for detecting the reception of control signals in said wireless control system, and control means (4, 27) for controlling the diversion of communication data from said telephone apparatus to said mobile terminal or vice versa on the basis of detected control signals. Thereby, communication data as e. g. incoming phone calls either addressed to a mobile terminal or to a telephone apparatus allocated to a fixed place, e. g. a house, an apartment, a car or the like, can be diverted to one of the two telephones.

## Description

The present invention relates to a telephone apparatus allocated to a fixed place.

In the countries of the first and the second world, almost every house, apartment, office, shop or the like is equipped with a telephone apparatus for in-house use, which is connected to a fixed communication or telephone network. Fixed communication or telephone network means a network of fixed wires, to which the telephone apparatuses are fixedly connected, e. g. by plug-in connections. Usually, one telephone number is allocated to one telephone apparatus. However, it is also possible, e. g. in houses or larger apartments, to have several telephone apparatuses, which can be addressed by a common telephone number. More recent systems like ISDN (Integrated Services for Digital Networks) allow to allocate more than one telephone number to one socket, so that one apartment or house can be equipped with several telephone apparatuses and/or fax machines, which can independently be addressed by a respective telephone number.

The telephone apparatuses for in-house use can generally be separated in two classes. The first class of telephone apparatuses for in-house use have the hand apparatus connected to a base part with a fixed wire connection, so that the user has to be close to the base part of the telephone apparatus while speaking. The second class of telephone apparatuses for in-house have a remote wireless hand apparatus. In this case, only the base part of the telephone apparatus is connected by means of a wire to the respective wall socket. The base part comprises wireless transmitting and receiving means for wirelessly transmitting and receiving communication data to and from the hand apparatus via an air interface. A widely used system in Europe for this air interface is DECT (Digital European Cordless Telephone).

Additionally to fixed network telephone systems, wireless cellular telephone systems are becoming more and more popular. In a wireless cellular telephone system, mobile terminals are communicating through an air interface with respective base stations within a cell. Each base station is thereby able to communicate with several different mobile terminals at the same time. An example for a wireless cellular telephone system used in Europe is GSM (Global System for Mobile communications). Like fixed communication networks, a wireless cellular telephone system can transmit speech data as well as user data like written data, image data or the like. People using mobile terminals of a wireless cellular telephone system usually have additionally a fixed telephone apparatus for in-house use in their apartment or house as well as in their office. Therefore, a person entering his or her apartment or office has the problem of having a telephone apparatus connected to a fixed telephone network as well as the mobile terminal in the same room, so that, when one of the telephone terminals rings, one does not know which of the terminals is ringing. Further, people often carry their mobile terminals in jackets and hang the jackets to a hall cupboard or the like when entering an in-door environment. In this case, one does not hear when the mobile terminal rings. This problem could be solved by switching the mobile terminal off as soon as one enters the office or the apartment. However, incoming calls are then diverted to a mailbox, which has the disadvantage that urgent calls cannot be answered.

The same problem exists for other places like cars, airplane cockpits, office rooms or the like. People tend to have a telephone apparatus fixedly allocated to each place of their living environment. This means, that a person would e. g. have a telephone apparatus for in-house use fixedly connected to a fixed or wired communication network at home or in the office as well as a mobile terminal allocated to their car, their weekend flat or the like. The mobile terminal in the car is, although being mobile, fixedly allocated to the car so that the user has always a telephone apparatus available while driving the car. At the same time, the user might carry a personal mobile terminal around with him all the time so that, when he leaves the car, the office, the apartment or the like, he can always be reached or place telephone calls when necessary. However, the above described problems always arise when the user carrying his personal mobile terminal enters a place of his living environment, to which another telephone apparatus is allocated.

The object of the present invention is therefore to provide a telephone apparatus allocated to a fixed place, which can avoid the above-mentioned problems and which avoids problems arising from the double presence of a mobile terminal and the telephone apparatus in a place of the living environment of a user, i. e. an office, an apartment or the like.

This object is achieved by a telephone apparatus allocated to a fixed place, with communication means for transmitting and receiving communication data in a communication system, receiving means for receiving control signals in a wireless control system transmitted from a mobile terminal, said mobile terminal being adapted to communicate data in a wireless telecommunication system different from said wireless control system, detecting means for detecting the reception of control signals in said wireless control system, and control means for controlling the diversion of communication data from said telephone apparatus to said mobile terminal or vice versa on the basis of detected control signals.

Thus, the telephone apparatus according to the present invention enables to clearly determine, which of the telephone apparatus allocated to a fixed place or the mobile terminal presently being at said place receives incoming calls so that the user only has to concentrate on one of the telephones. Further, it can be avoided that incoming calls are missed and are not answered because the user only pays attention to one of the telephones. The wireless control system used for transmitting control signals from the mobile terminal to the telephone apparatus is different from the wireless telecommunication system used by the mobile terminal, e. g. the GSM-system, so that interference is avoided and a low cost and low power solution can be implemented. The telephone apparatus allocated to the fixed place may e. g. be allocated to an office, an apartment, a house, a car or the like. Further, the telephone apparatus may either be a telephone apparatus connected to a fixed or wired communication network or a mobile terminal of a wireless telecommunication system. Thereby, the wireless telecommunication system of the mobile terminal allocated to the fixed place might be the same telecommunication system in which the mobile terminal sending the control signals in the wireless control system is operating. In this case, both of the mobile terminals might have exactly the same configuration.

Advantageously, the control means of the telephone apparatus causes the diversion of communication data addressed to the mobile terminal to the telephone apparatus in case that the control signals from the mobile terminal are detected in the detecting means of the telephone apparatus. Thus, as soon as a user with a mobile terminal enters his apartment, his office or his house, the telephone apparatus fixedly allocated receives the control signals from the mobile terminal, whereafter all incoming calls to the mobile terminal are diverted to the telephone apparatus. The user thus can leave his mobile terminal in his jacket while being sure that he does not miss any incoming calls. In this case, the telephone apparatus advantageously comprises a transmitting means for transmitting switch-off signals in the wireless control system for switching off the mobile terminal. These switch-off signals may e. g. be provided by the control means of the telephone apparatus.

The control means causing the diversion of communication data can e.g. simply generate and transmit corresponding signals through a simple signaling channel between the fixed and the wireless operator. The signals generated and transmitted from the control means thereby notify the service center of the cellular operator at all incoming calls for this particular mobile terminal should be transferred to the telephone apparatus allocated to the fixed place. The setup of this functionality could e.g. be done by either the subscriber itself or by a service center of the cellular or the fixed operator. Another possibility is that the control means generates and transmits signals for the diversion of the communication data through the wireless control system. In this case, the control means transmits corresponding signals to the mobile terminal and the mobile terminal initiates the diversion of communication data upon request of the telephone apparatus allocated to the fixed place.

Alternatively, the communication data addressed to the telephone apparatus are received by the communication means of the telephone apparatus and communication data addressed to the mobile terminal are received by the mobile terminal in case that control signals from the mobile terminal are detected in the detecting means. In this case, no diversion of communication data takes place in case that and as long as control signals from the mobile terminal are received by the telephone apparatus. This is advantageous in cases that the user wants to separate incoming calls, e. g. in case that the telephone apparatus is located in his office and he uses the mobile terminal only for private reasons. However, in this case as well as in the other cases described above, it may be advantageous if the control means of the telephone apparatus causes the diversion of communication data addressed to the telephone apparatus to the mobile terminal in case that control signals from the mobile terminal are not or no longer detected in the detecting means of the telephone apparatus. E. g., if the user leaves his office or his apartment, in which the telephone apparatus according to the present invention is located, and takes the mobile terminal along, all calls addressed to the telephone apparatus as well as to the mobile terminal are received by the mobile terminal, so that no telephone calls are missed or remain unanswered.

Further advantageously, the control means of the telephone apparatus, upon the detection of control signals in the detecting means of the telephone apparatus, generates control signals for causing the diversion of communication data in a distributing center for distributing communication data in the fixed communication network.

Further advantageously, the communication means of the telephone apparatus is connected to and adapted for transmitting and receiving communication data in a fixed communication network. In this case, the telephone apparatus is fixedly installed and connected to a wired telephone network, as e. g. in a house, in an apartment or an office.

Alternatively, the telephone apparatus is a mobile terminal of a wireless telecommunication system, whereby the communication means is adapted for transmitting and receiving communication data in said telecommunication system. The wireless telecommunication system may thereby be the same wireless telecommunication system used by the mobile terminal transmitting the control signals for controlling the diversion of communication data from the telephone apparatus to the mobile terminal or vice versa.

The present invention is explained in more detail in the following description by means of preferred embodiments thereof related to the enclosed drawings, in which
figure 1 shows a block diagram of a first embodiment of a telephone apparatus for in-house use according to the present invention,
figure 2 shows a block diagram of a second embodiment of a telephone apparatus according to the present invention, and
figure 3 shows a block diagram of a third embodiment of a telephone apparatus according to the present invention.

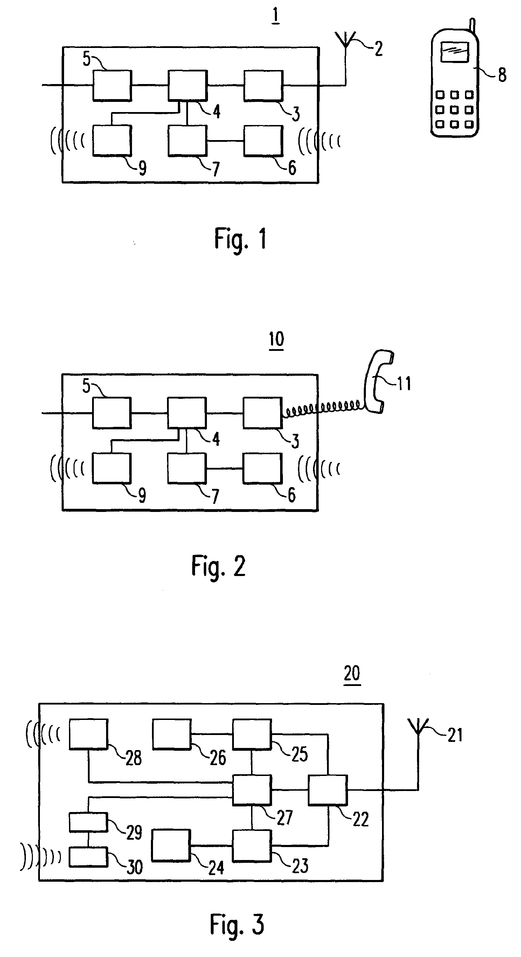

Figure 1 shows a schematic diagram of a first embodiment of a telephone apparatus 1 allocated to a fixed place according to the present invention. The telephone apparatus 1 comprises a base part comprising an antenna 2, a transmitting and receiving means 3 connected to the antenna 2 for communicating with a remote hand apparatus 8, a control means 4 for controlling the receiving and transmitting of communication data between the hand apparatus 8 and the base part, and a communication means 5 being connected to a fixed communication network for transmitting and receiving communication data. Thereby, the communication means 5 can e. g. be connected to a wall socket of an apartment, a house, an office or the like by means of a plug-in connection. The base part of the telephone apparatus 1 is adapted to communicate with the respective hand apparatus 8 through an air interface, e. g. on the basis of the DECT-system.

The base part of the telephone apparatus 1 further comprises a receiving means 6 for receiving or picking up control signals of a wireless control system transmitted from a mobile terminal. The mobile terminal is thereby adapted to communicate data in a wireless telecommunication system different from the wireless control system and different from the wireless communication system, e. g. the DECT-system, on the basis of which communication data are transmitted between the antenna 2 of the base part of the telephone apparatus 1 and the hand apparatus 8 of the telephone apparatus 1. The mobile terminal can be adapted to communicate data in the GSM-system. Examples for the wireless control system, on the basis of which the mobile terminal transmits control signals to the telephone apparatus 1, are set out further below in more detail. In any case, the wireless control system is chosen not to interfere with the wireless telecommunication system used by the mobile terminal and the wireless communication system used for the communication between the base part and the hand apparatus 8 of the telephone apparatus 1. Further, the transmission range of the wireless control system of the present embodiment is chosen to be sufficient for the respective place the telephone apparatus is adapted to be allocated to. The respective place might be a house, an apartment, an office or the like in which the telephone apparatus 1 may be connected through its communication means 5 to a fixed or wired communication network. Advantageously the wireless control system is chosen not to require line-of-sight contact between the portable terminal 20 transmitting the control signals and the receiving means 6 of the base part of the telephone apparatus 1.

Figure 2 shows a schematic diagram of a second embodiment of a telephone apparatus 10 according to the present invention. The elements of the telephone apparatus 10 which are identical to the elements of the telephone apparatus 1 shown in figure 1 are designated by the same reference numerals. The telephone apparatus 10 is very similar to and operating identically to the telephone apparatus 1 shown in figure 1, with the only difference, that the hand apparatus 11 of the telephone apparatus 10 is connected by a wire to the transmitting and receiving means 3. All other elements, namely the control means 4, the receiving means 6, the detecting means 7 and the communication means 5 are configured and operated in the same way as described relating to figure 1. Both telephone apparatuses 1 and 10 of figure 1 and 2, respectively, further comprise all elements necessary for a normal telephone operation, although these elements are not shown in the drawings.

The control means 4 of the telephone apparatus 1, 10 controls the diversion of communication data from the telephone apparatus 1, 10 to the portable terminal 20 or vice versa on the basis of control signals transmitted from a mobile terminal entering or being switched on at the place the telephone apparatus is allocated to and received by the receiving means 6 and detected by the detecting means 7. Thereby, the diversion of the communication data can either be preset or selected by the user by means of a corresponding input means implemented in the telephone apparatus 1 or 10. In the second case, the user can choose how and which arriving communication data, e. g. incoming phone calls, are diverted from the telephone apparatus 1 or 10 to the mobile terminal or from the mobile terminal to the telephone apparatus 1 or 10. Thereby, upon reception of control signals from a mobile terminal in the receiving means 6 and detecting received control signals by the detecting means 7, the control means 4 activates the diversion of communication data as long as control signals are received and detected, or the control means 4 only activates a diversion of communication data when control signals are no longer received and detected. E. g., the control means 4 causes the diversion of communication data originally addressed to the mobile terminal to the telephone apparatus 1 or 10 in case that control signals from the mobile terminal are received by the receiving means 6 and detected by the detecting means 7. In this case, the control means 4 may provide switch-off signals which are transmitted by a transmitting means 9 of the telephone apparatus 1 or 10 on the basis of the wireless control system to the mobile terminal having transmitted the control signals. The mobile terminal receiving the switch-off signals is switched off upon receiving the switch-off signals so that energy in the mobile terminal is saved. This is particularly advantageous since the mobile terminal is not able to receive communication data anyway, since the communication data addressed to the mobile terminal are diverted to the telephone apparatus 1 or 10. Additionally or alternatively, the control means 4 causes the diversion of communication data originally addressed to the telephone apparatus 1 or 10 to the mobile terminal in case that control signals from the mobile terminal are not or no longer detected. Further, depending on how the control means 4 controls diversion of communication data when no control signals are received and detected, the control means 4 can control the diversion of communication data upon detecting control signals in the detecting means 7 by allocating communication data addressed to said telephone apparatus 1 or 10 to the telephone apparatus 1 or 10 and communication data addressed to the mobile terminal to the mobile terminal.

As stated above, the communication means 5 of the telephone apparatus 1 or 10 is connected to a fixed communication network for transmitting and receiving communication data thereto and therefrom. The fixed (wired) communication network usually comprises distributing centers for distributing and allocating communication data to the destination, e. g. telephone apparatuses, they are addressed to. For controlling the diversion of communication data according to the present invention, the control means 4 generates diversion control signals upon detecting or not detecting control signals in the detecting means 7 and supplies the generated diversion control signals to a corresponding distribution center, which diverts the communication data according to the received diversion control signals. Alternatively, the control means 4 generates diversion control signals and supplies the conversion control signals by means of the transmitting means 9 to the mobile terminal on the basis of the wireless control system. The mobile terminal receiving the diversion control signals may then initiate the diversion of the communication data to the telephone apparatus 1 or 10 itself by transmitting corresponding signals to its base station.

Figure 3 shows a block diagram of a third embodiment of a telephone apparatus according to the present invention. The telephone apparatus of the third embodiment is a mobile terminal 20 of a wireless telecommunication system, as e. g. the GSM system. The mobile terminal 20 is adapted to be allocated to a fixed place, such as a house, an apartment, an office, a car or the like. The mobile terminal 20 shown in Figure 3 has the same functional elements as a telephone apparatus 1 or 10 shown in Figure 1 and 2, respectively, with the only difference that the mobile terminal 20 is adapted to communicate in a wireless telecommunication system instead of being connected to a fixed communication network. Thus, the mobile terminal 20 comprises communication means 22 for transmitting and receiving communication data in a wireless telecommunication system via an antenna 21. Further, the mobile terminal 20 comprises a receiving means 30 for receiving control signals in a wireless control system transmitted from another mobile terminal, whereby the other mobile terminal is also adapted to communicate data in a wireless telecommunication system. This wireless telecommunication system used by the other mobile terminal may be the same or a different telecommunication system used by the mobile terminal 20. However, both telecommunication systems are different from the wireless control system used for transmitting and receiving control signals for controlling the diversion of communication data. The mobile terminal 20 further comprises detecting means 29 for detecting the reception of control signals in the receiving means 30. Further, the mobile terminal 20 comprises control means 27 for controlling the diversion of communication data from the mobile terminal 20 to the mobile terminal having transmitted the control signals or vice versa on the basis of the detected control signals. Thereby, the control means 27 controls the diversion of communication data in the same way as the control means 4 of the telephone apparatus 1 or 10, as explained above in relation to Figure 1 and Figure 2. Thereby, the communication means 22, the receiving means 30, the detecting means 29 and the control means 27 of the mobile terminal 20 have the same functions as the communication means 5, the receiving means 6, the detecting means 7 and the control means 4, respectively, of the telephone apparatus 1 or 10, so that a further explanation thereof is omitted. Further, the mobile terminal 20 may comprise a transmitting means 28 for transmitting switch-off signals in the wireless control system for switching off the other mobile terminal having transmitted the control signals for controlling the diversion of communication data. The switch-off may e. g. be provided by the control means 27.

The mobile terminal 20 further comprises the typical means necessary for an operation in a wireless telecommunication system, as e. g. a decoding means 25 for decoding signals received in the communication means 22, a loudspeaker 26 connected to the decoding means, a coding means 23 for coding signals to be transmitted and a microphone 24 connected to the coding means 23. The control means 27 may thereby also be adapted to control the transmission and reception of signals in the wireless telecommunication system. Alternatively, a separate control means may be provided.

It is to be noted, that the mobile terminal transmitting control signals in a wireless control system according to the present invention, whereby the control signals are received by a telephone apparatus 1, 10 or 20 as shown in the Figures 1, 2 and 3, respectively, may have the same structure as the mobile terminal 20 according to the third embodiment of the telephone apparatus according to the present invention shown in Figure 3. Thereby, the control means provides the control signals for controlling the diversion of communication data from a telephone apparatus according to the present invention receiving the control signals to the mobile terminal or vice versa.

In the following, possible technical implementations of the wireless control system used for the control signals according to the present invention are described in more detail. In case of the telephone apparatus 1, it might be possible to use a portable terminal for a normal cellular wireless telecommunication system instead of the hand apparatus 8 for in-house communication with the base part of the telephone apparatus 1. In this case, the air interface used by the base part of the telephone apparatus 1 is compatible with the wireless cellular telecommunication system used by the portable terminal. Further, the portable terminal could be a dual band terminal being able to operate in the wireless cellular telecommunication system as well as in the wireless communication system used by the base part of the telephone apparatus 1. In any case, the control system used for transmitting and receiving the control signals for controlling the diversion of communication data according to the present invention is different from the wireless cellular telecommunication system used in the portable terminal transmitting the control signals and also different from the wireless communication system used in the telephone apparatus 1 to avoid interference. The wireless control system used in the present invention can be based on the following principles:
Time Division Multiple Access (TDMA). Example implementations of cellular systems based on this principle are the ETSI Standard GSM, as described in Chapters 3-11 of "An Introduction to GSM" from Redl, Weber, Oliphant, Artech House, 1995; The Standards NADC, IS-54, IS-136, as described in Chapter 12 of this book; and RCR/ARIB PDC. Examples of cordless systems based on this principle are standardized as ETSI DECT, RCR/ARIB PHS, EIA PWT, and Bluetooth.
CDMA (Code Division Multiple Access), e.g. EIA/TIA IS-95, EIA/TIA IS-95A, EIA/TIA IS-95B, as described in Chapter 13 of "An Introduction to GSM" as mentioned above.
TD-CDMA (Time Division-Code Division Multiple Access).
Analog continuous-time transmission methods such as AM, FM, SSB.
Compressed time / time-slot versions of systems based on analog transmission methods.
Broadcast systems (FM, AM, COFDM, e.g. DAB).
Pager systems (POCSAG).
Optical/Infrared systems.
Acoustic/Ultrasonic systems.

Hereafter some advantageous types of implementations of the wireless control system of the present invention are considered.

It is suggested to use a short wavelength (decimeters and less) to determine a short range of control around the telephone apparatus 1, 10 or 20, according to the present invention, which is receiving control signals of the wireless control system from a portable terminal. Absorption in obstacles can be planned as desired. Natural propagation of RF waves causes a path attenuation which is proportional to 4π/λ²*d², where d is the distance between transmitter and receiver and λ is the wavelength used. Typical home or office environments create even larger wave attenuation typically proportional to 4π/λ²*d³ above a distance of about 10 meters.

Different possible implementations of the control system have each specific characteristics, advantages and disadvantages.

Radio frequency systems, i.e. systems, which use radio frequency protection signals, yield a good coverage range per transmitted power. A long range is therefore possible, depending on selected transmit power, receiver sensitivity, wavelength, and anticipated interference. An omni-directional radiator can be implemented easily in the portable terminal transmitting the control signals, resulting in almost circular or spherical ranges. Radio frequency waves pass through some obstacles and encounter inflection, depending on the selected wavelength, therefore a line of sight between transmitter and receiver is usually not required. As an example, the control system could be implemented using Bluetooth as the basic standard.

Optical systems typically have a short range per transmitted power. Radiators are usually directional such as in the case of an LED. Some gain in range or transmit power reduction can be achieved by concentration of radiation. Omni-directional radiators are big and heavy. Scattering can remove the restrictions of directional radiators at the expense of transmit power. Optical systems can be implemented in a cost efficient way. Particularly transmitters can be very cheap. System approval can be obtained easily. Radiation does not pass through most of the common obstacles such as walls or furniture. That could be a desired feature. A line of sight path between transmitter and receiver is usually required. Optical systems generate few interference to other devices or services. Few health considerations arise from their use.
As an example, the control system could be implemented using infrared technology e.g. from home appliance remote controls as the basic standard.

Acoustic systems typically have a short to medium range. The required transmit power per range obtained is rather high. Typical systems have a directional radiator such as a piezoelectric speaker. Acoustic waves are scattered, inflected and reflected by most of the usual objects in home or office environments, therefore a line of sight between transmitter and receiver is usually not required. Radiation does not pass through most of the common obstacles such as walls, windows, furniture. System approval can be obtained easily. Acoustic systems generate few interference to other devices or services and only few health considerations arise from their use.
As an example, the control system could be implemented using ultrasonic technology e.g. from home appliance remote controls as the basic standard.

As a preferred example, the control system could be implemented using radio frequency technology based on "Bluetooth".
Bluetooth is a standard which is currently still under development. Bluetooth supports wireless ad-hoc voice and data connectivity. Bluetooth is a TDMA/TDD/FHSS system that operates in the unlicensed 2.4GHz ISM band, frequencies for its operation have been allocated worldwide. A range of 10 meters or even 100 meters (using higher transmit power) can be achieved. No line-of-sight is necessary for a successful communication.
Due to features like worldwide ad-hoc connectivity, low power, small size and ease of integration, Bluetooth is very well suited to the requirements of a protection system according to this invention. A Bluetooth subsystem can be implemented on a single silicon chip. A Bluetooth subsystem can also be integrated into existing chip designs.

## Claims

1. Telephone apparatus (1, 10, 20) allocated to a fixed place, with
communication means (5, 22) for transmitting and receiving communication data in a communication system,
receiving means (6, 30) for receiving control signals in a wireless control system transmitted from a mobile terminal, said mobile terminal being adapted to communicate data in a wireless telecommunication system different from said wireless control system,
detecting means (7, 29) for detecting the reception of control signals in said wireless control system, and
control means (4, 27) for controlling the diversion of communication data from said telephone apparatus to said mobile terminal or vice versa on the basis of detected control signals.

2. Telephone apparatus (1, 10, 20) allocated to a fixed place according to claim 1,
**characterized in,**
that said control means (4, 27) causes the diversion of communication data addressed to said mobile terminal to said telephone apparatus (1, 10) in case that said control signals from said mobile terminal are detected in said detecting means.

3. Telephone apparatus (1, 10, 20) according to claim 2,
**characterized by**
a transmitting means (9, 28) for transmitting switch-off signals in the wireless control system for switching off said mobile terminal.

4. Telephone apparatus (1, 10, 20) allocated to a fixed place according to claim 1,
**characterized in,**
that said communication data addressed to said telephone apparatus (1, 10, 20) are received by said communication means (5, 22) and communication data addressed to said mobile terminal are received by said mobile terminal in case that control signals from said mobile terminal are detected in said detecting means (7, 29).

5. Telephone apparatus (1, 10) allocated to a fixed place according to one of the claims 1 to 4,
**characterized in,**
that said control means (4, 27) causes the diversion of communication data addressed to said telephone apparatus (1, 10, 20) to said mobile terminal in case that control signals from said mobile terminal are not or no longer detected in said detecting means.

6. Telephone apparatus (1, 10, 20) allocated to a fixed place according to one of the claims 1 to 5,
**characterized in,**
that said control means (4, 27), upon the detection of control signals in said detecting means (7, 29), generates control signals for causing the diversion of communication data in a distributing center for distributing communication data in said communication system.

7. Telephone apparatus (1, 10) allocated to a fixed place according to one of the claims 1 to 5,
**characterized in,**
that said communication means (5) is connected to and adapted for transmitting and receiving communication data in a fixed communication network.

8. Telephone apparatus (20) allocated to a fixed place according to one of the claims 1 to 5,
**characterized in,**
being a mobile terminal (20) of a wireless telecommunication system, whereby said communication means (22) is adapted for transmitting and receiving communication data in said telecommunication system.
